# EUROPEAN PATENT SPECIFICATION

(11) **EP 3 373 786 B1**
(45) Date of publication and mention of the grant of the patent: **10.04.2019**
(21) Application number: 17700855.4
(22) Date of filing: 23.01.2017
(51) Int. Cl.: A47J 43/07, A47J 43/08

(54) **SAFETY BEARING ARRANGEMENT AND FOOD PROCESSING DEVICE**
SICHERHEITSLAGERANORDNUNG UND LEBENSMITTELVERARBEITUNGSVORRICHTUNG
AGENCEMENT DE PALIER DE SÉCURITÉ ET DISPOSITIF DE TRAITEMENT DE PRODUITS ALIMENTAIRES

(30) Priority: 05.02.2016 EP 16154376
(43) Date of publication of application: 19.09.2018
(73) Proprietor: Koninklijke Philips N.V., 5656 AE Eindhoven (NL)
(72) Inventor: OBERSTEINER, Heimo, 5656 AE Eindhoven (NL); MURBACHER, Werner Karl, 5656 AE Eindhoven (NL)
(74) Representative: Freeke, Arnold
(86) International application number: PCT/EP2017/051262
(87) International publication number: WO 2017/133909

(56) References cited:
- US-A1- 2005 068 846
- US-A1- 2008 223 965
- US-A1- 2015 117 139
- US-B1- 6 210 033

## Description

### FIELD OF THE INVENTION

The present disclosure relates to a safety bearing arrangement for a food processing device comprising a container and a processing tool arranged to be rotated with respect to the container for processing food, the bearing arrangement comprising a first bearing part and a second bearing part which are arranged to be rotated relative to one another. The disclosure further relates to a food processing device, particularly a food chopper, mixer or blender, the device comprising a container and a processing tool arranged to be rotated with respect to the container for processing food.

### BACKGROUND OF THE INVENTION

WO 2007/015189 A2 discloses a food processing device comprising a container comprising a central shaft fixedly mounted on the container bottom, a lid covering the container, a processing tool unit supporting a food processing tool, its upper end being arranged to be with a drive unit through the lid, its lower end having an elongated cavity for rotatably engaging the central shaft and allowing for pivotal movement about the axis of the central shaft, the elongated cavity being provided with a bearing part, wherein the bearing part has a predetermined shape on its inner surface for jamming with the central shaft during the pivotal movement.

A similar arrangement of a food processing device is known from WO 2007/046029 A1, the device comprising a sieve defining a processing zone and a collecting zone in the container.

Usually, the processing of food by kitchen appliances is based on a rotational movement of a tool. By rotating for example a blade, a set of blades, or a disk with a number of blades, food may be chopped, cut, grated, mixed, blended etc. To efficiently chop very hard food like nuts, spices, ice cubes or very hard vegetables or fruits, an adequate purpose-specific tool may be used. For instance the number, geometry and sharpness of the blades may be adapted accordingly. Further, the speed of rotation may be increased. Further, the processing time for the food may be processed which may involve a repetitive separation of already processed food from the food still to be processed.

Food processing devices must fulfill relatively strict safety regulations, especially if they operate with potentially dangerous tools like rotating blades. If the appliance is switched off, or a driving unit is removed, the tool continues to rotate with quite high speed due to a present moment of inertia.

So as to obtain an official approval/certification, such devices have to fulfill several normative regulations. One example is the safety regulation IEC 2002 - 60335-2-14 / Part 20.112 according to which the cutting blade of a food processing device shall stop within 1.5 s (seconds) after the cover has been opened or removed - even without additional load and at the highest (nominal) speed. At least in some jurisdictions, these and other regulations have to be complied with to so as to obtain official sales approval.

A blender jar assembly is known from US 2915/117139 A1 and discloses a bearing assembly with a braking system. The braking system is activated in response to removal of a blender jar from its blender base.

### SUMMARY OF THE INVENTION

It is an object of the present disclosure to provide a safety bearing arrangement and a food processing device implementing such a bearing arrangement that provide, particularly in a braking condition, a fast deceleration action for a processing tool. Further, the bearing arrangement shall be composed of a limited number of parts, and shall preferably act as an interface between separable components of the food processing device. It would be further advantageous to provide a safety bearing arrangement that can be manufactured and assembled with relatively little effort and that is configured for a sufficient operation service time. Further, it is desirable to provide a safety bearing arrangement that ensures a reliable operation of a processing tool, both in a processing operation condition and a braking condition.

In a first aspect of the present disclosure a safety bearing arrangement for a processing device comprising a container and a processing tool arranged to be rotated with respect to the container for processing food is presented, the bearing arrangement comprising a first bearing part, particularly a bearing pin, and a second bearing part, particularly a bearing seat, wherein one of the first bearing part and the second bearing part is associated with the container and the other one is associated with a tool unit, wherein the first bearing part and the second bearing part are arranged to engage one another with an interference fit so that, when a driving torque is applied to the processing tool to rotate the first and second bearing parts with respect to one another, a friction torque is generated between said first and second bearing parts to decelerate the processing tool when no driving torque is applied to the processing tool.

This aspect is based on the insight that a bearing which is anyway provided to define an interface between a container and a processing tool (shaft) of the food processing device may be configured to act as a safety feature causing a deceleration, preferably a sudden stop, of the rotating processing tool when no driving moment/force is applied to the processing tool. This may be for instance the case when a driving motor of the food processing device is shut off or removed. Typically, since the processing tool is rotating at high speeds, a considerable moment of inertia is present. This would basically cause a midterm or even a long-term overrun or overshoot of the processing tool. In such cases, a certain risk is present when the rotating tool is revealed or exposed and could potentially come into contact with a user.

As used herein, the safety bearing arrangement may be also referred to as safety brake arrangement, or as combined safety brake and bearing arrangement. Preferably, the safety bearing arrangement is defined in such a way that a braking time of no more than 2.0 s (seconds) preferably no more than 1.5 seconds is achieved. Further, it is preferred that the safety bearing arrangement is arranged in such a way that the food processing device that implements the bearing arrangement exhibits a sudden stop braking performance in accordance with the IEC 2002 - 60335-2-14 / part 20.112 safety regulation.

In accordance with the disclosure, a bearing arrangement is proposed which requires only a limited number of parts, preferably only two contacting bearing components. Consequently, the bearing arrangement is easy to manufacture and easy to assemble. This is particularly advantageous in low-end and mid-range markets that are cost-sensitive.

The safety bearing arrangement is particularly suited for low speed range applications and appliances, e.g. devices that are operable in a blade rotation speed range between more that 0.0 and 3.000 RPM.

In accordance with the above aspect, the bearing arrangement is a multipurpose arrangement. The arrangement is configured to serve as a bearing arrangement as such, but also as a safety brake arrangement. Further, the bearing arrangement is preferably a detachable bearing arrangement wherein at least one of the first bearing part and the second bearing part may be removed or detached from the other one. Particularly in food chopping devices, it is required to remove the processing tool from the container, for instance to clean the device, to clear/empty the container and/or to replace the processing tool.

The bearing arrangement is configured to enable a sliding relative movement between the first bearing part and the second bearing part. Consequently, the bearing arrangement may be also referred to as slide bearing. However, the bearing arrangement is configured in such a way that a defined preloading, particularly a radial preloading, is present between the first bearing part and the second bearing part when they engage one another. The preloading between the involved contact elements of the first bearing part and the second bearing part induces a friction force/moment between both bearing parts. Therefore, assuming that a driving motor is shut off, a remaining moment of inertia is reduced in a short amount of time involving a significant reduction of the speed of the rotating processing tool.

On the other hand, the friction force/moment between the first bearing part and the second bearing part is also present when the processing tool is deliberately powered and operated to process food products which involves that also a driving motor is activated. However, the friction force/moment does not considerably inhibit the operating performance of the food processing device. Further, no excessive heat generation and/or wear due to the sliding relative movement of the first bearing part and the second bearing part is involved, given typical application fields and particular application cases of food processing devices. In other words, a food processing device is generally not operated in a state of permanent or continuous operation. Rather, typically a short-term operation and/or an interrupted/intermittent operation is used.

Consequently, the safety bearing arrangement is easy to operate as no actuation by the user is required. Further, the safety bearing arrangement enables a safe operation also of low-end and mid-range food processing appliances.

Generally, the processing tool is arranged to be coupled with the container. To this end, a tool unit may be provided with is arranged to receive or to form the processing tool. The second bearing part may form part of a tool unit supporting the processing tool, or may be connected thereto. The first bearing part may form part of the container or may be connected thereto.

In one embodiment, the bearing arrangement is operable in a first, operating state, when the processing tool is powered by a drive unit, and in a second, braking state, when the applied driving torque is below a friction torque that is present between the first bearing part and the second bearing part. The braking state may be also referred to as overrun state. Typically, in the braking state no external driving torque is present as typically the motor driving the processing tool is shut off. Needless to say, along a drivetrain coupling the motor and the processing tool (at least a tool holder thereof) a certain moment of inertia may be present even though the operation of the motor is already stopped. The braking arrangement is configured for reducing said overrun moment so as to eventually stop any rotation of the processing tool with respect to the container.

Preferably, a defined contact section between the first bearing part and the second bearing part is provided. Generally, the bearing arrangement may form a rotational bearing and/or support of the processing tool with respect to the container. In some embodiments, the bearing arrangement also provides an axial bearing or support of the processing tool with respect to the container.

In a further embodiment of the bearing arrangement, the first bearing part is a fixed bearing part and the second bearing part is a movable bearing part. Both the first bearing part and the second bearing part may be moved, particularly rotated, with respect to one another in a relative movement.

In a further embodiment, the first bearing part is arranged at the container and the second bearing part is arranged at the processing tool. Hence, an integrated bearing may be defined at an interface between the container and the processing tool. Needless to say, the processing tool, particularly the tool unit supporting the processing tool, may be arranged in a detachable fashion. That is, the processing tool and the second bearing part coupled therewith may be brought into engagement and out of engagement with the container, particularly the first bearing part. Consequently, respective ones of a set of processing tools may be used, for instance processing tools that are specifically configured for processing nuts, onions, ice, etc.

In yet another embodiment, the first bearing part is a bearing pin, wherein the second bearing part is a recessed bearing seat, and wherein the bearing pin is arranged to be inserted in the recessed bearing seat. Hence, a bearing pin forming the first bearing part may be arranged at the container. Furthermore, a recessed bearing seat may be formed at the processing unit, and may define the second bearing part.

Needless to say, also alternative arrangements may be envisaged wherein a bearing pin is formed at the tool unit and wherein a corresponding recessed bearing seat is formed at or attached to the container.

Further, as used herein, a first bearing part and a second bearing part form the bearing arrangement, wherein the indications first bearing part and second bearing part are primarily provided for illustrative purposes, and shall not be construed in a limiting sense.

In yet another embodiment of the bearing arrangement, at least one of the first bearing part and the second bearing part comprises a deflectable contact portion, particularly a slotted contact portion, arranged to contact a mating contact portion at the other one of the first bearing part and the second bearing part in a preloaded fashion. Consequently, at least a slight pretension or bias may be present between the first bearing part and the second bearing part.

When the first bearing part and the second bearing part engage one another, the deflectable contact portion is at least partially deflected so as to enable a fit of the first bearing part and the second bearing part. Consequently, due to the deflection, a certain preloading is present. In other words, in an unbiased, non-deflected state, an interference fit may be present at the respective contact portions of the first bearing part and the second bearing part. Due to the deflectable contact portion, a defined level and range of the preloading may be ensured. By contrast, considerably stiff and rigid (not slotted) contact portions at both the first bearing part and the second bearing part would result in an enormous level of preloading tension when the first bearing part and the second bearing part engage one another. At the deflectable contact portion, the braking force or baking moment is generated.

To provide one of the first bearing part and the second bearing part with a deflectable contact portion results in a somewhat "flattened", linear predictable relationship between the interference (in a non-contact state) and the resulting preloading between the first bearing part and the second bearing part.

In yet another embodiment of the bearing arrangement, a present preloading between the deflectable contact portion and the mating contact portion is dependent on an axial relative position of the first bearing part with respect to the second bearing part. In accordance with this embodiment, at least one of the first bearing part and the second bearing part may comprise a tapered contact portion, preferably both the first bearing part and the second bearing part comprise a tapered contact portion. Consequently, an actual interference resulting in an axial deflection defines the pretension between the first bearing part and the second bearing part.

In accordance with alternative embodiments, the contact sections of the first bearing part and the second bearing part are basically arranged in a cylindrical non-tapered fashion. This involves that an axial bearing between the first bearing part and the second bearing part may be provided by separate or even remote portions.

In the embodiment involving at least one tapered contact portion at one of the first bearing part and the second bearing part, no separate axial bearing needs to be provided.

In accordance with another embodiment of the bearing arrangement, the deflectable contact portion is formed at a bearing sleeve comprising a slotted end portion including at least one basically axially extending slot. In the alternative, at least slightly helical and/or circumferentially extending slots may be utilized.

A number of slots may be selected so as to ensure the desired level of pretension. For instance, two slots may be provided at the bearing sleeve, preferably arranged in a fashion opposite to one another. In alternative embodiments, three, four or even more slots are distributed along the circumference of the deflectable contact portion in an evenly distributed or another appropriate fashion.

In another embodiment of the bearing arrangement, a defined nominal interference fit is present between the first bearing part and the second bearing part, wherein, in an engaged state, the deflectable contact portion is at least partially deflected, thereby limiting a press force. The axial interference defines the resulting level of deflection. By providing the deflectable contact portion, a basically linear relation between the interference and the resulting press force, at least approximately, may be achieved. This may greatly simplify manufacturing the involved bearing parts, basically allowing larger tolerances.

In another aspect of the present disclosure, a food processing device is presented, the device comprising a container, a processing tool that is drivable by a drive unit, wherein the processing tool is arranged to be rotated with respect to the container for processing food, wherein the drive unit is arranged to be detachably coupled with the container, wherein the processing tool is arranged to be interposed between the container and the drive unit, and wherein a bearing arrangement in accordance with at least one embodiment as discussed herein is arranged between the container and the processing tool in such a way that the processing tool is rotatably supported.

The driving unit may form an integrated component of the food processing device, or may be arranged to be attached to the device, preferably in a releasable fashion. The driving unit may be a top-mounted driving unit. Generally, the food processing device may be arranged as a worktop standing device. In other words, the container may form a base portion of the food processing device and may receive and support the tool unit and the driving unit. Generally, the processing tool may comprise at least one blade. For instance, the processing tool may form part of a tool unit comprising a tool holder receiving and supporting the processing tool.

In one embodiment of the food processing device, in a mounted state of the tool unit, a defined pressing force between the first bearing part and the second bearing part is present at a bearing arrangement, wherein the pressing force induces the braking frictional force. Preferably, a defined radial press force is present, due to a defined interference fit between the first bearing part and the second bearing part and, preferably, a deflection of one of the first bearing part and the second bearing part resulting therefrom.

In yet another embodiment of the food processing device, the container is arranged as a bottom part comprising a top opening, wherein a basically vertically extending bearing pin is arranged at the container, wherein the processing tool comprises a first interface, particularly an engagement profile, arranged to be directly or mediately rotated by the driving unit, and a second interface, particularly a bearing seat, arranged to engage the bearing pin.

In other words, the tool unit forms a link, particularly a transmission link between the driving unit and the bearing pin at the container. Consequently, at a bottom end of the tool unit, the bearing arrangement in accordance with the present disclosure defines a first radial bearing, wherein, at least in some embodiments, a second radial bearing is provided at a second top end of the tool unit. However, depending on an actual shape of the bearing pin, arrangements involving only a single radial bearing may be envisaged.

In yet another embodiment, the food processing device further comprises a cover arranged to cover a processing compartment defined by the container, wherein the cover comprises a driving transfer passage through which a driving moment may be transferred into the processing compartment. The cover may be also referred to as lid. The container may be also referred to as bowl. The cover may basically seal an interior of the container, where the food is processed, from an exterior thereof.

In yet another refinement of the food processing device, the cover is arranged to receive the driving unit or to be detachably coupled with the driving unit, wherein the driving unit is arranged to rotate the processing tool in a one-to-one translation fashion or at a defined translation ratio. In other words, also at least one transmission stage or gear stage may be provided. Generally, the cover may be releasably mounted on the container. Similarly, the driving unit may be detachably mounted on or coupled with the cover. In some embodiments, the driving unit and the cover form an integrated component.

In yet another embodiment, the food processing device further comprises a perforated screen arranged to be mounted at the container, preferably between the container and the cover, the screen being arranged to divide the compartment, wherein, in the mounted state, any blade of the processing tool is arranged between the screen and the cover, and wherein the screen comprises a bearing opening through which the processing tool at least partially extends to form the bearing arrangement. The screen may be also referred to as basket or sieve.

### BRIEF DESCRIPTION OF THE DRAWINGS

These and other aspects of the invention will be apparent from and elucidated with reference to the embodiments described hereinafter. In the following drawings
Fig. 1 shows an exploded perspective view of an embodiment of a food processing device;
Fig. 2 shows an exploded perspective view of another embodiment of a food processing device comprising a set of processing tools;
Fig. 3 shows an exploded perspective view of yet another embodiment of a food processing device comprising a set of processing tools;
Fig. 4 is a perspective side view of a tool unit wherein a bearing part is shown in a detached state;
Fig. 5 is a cross-sectional view of the arrangement of Fig. 4;
Fig. 6 is a perspective top view of a first exemplary embodiment of a bearing sleeve;
Fig. 7 is a perspective top view of a second exemplary embodiment of a bearing sleeve;
Fig. 8 is a perspective top view of a third exemplary embodiment of a bearing sleeve;
Fig. 9 is a detailed partial cross-sectional view of a safety bearing arrangement in accordance with the present disclosure;
Fig. 10 is a cross-sectional side view of a tool unit comprising a processing tool and a bearing sleeve that defines a bearing seat;
Fig. 11 is a partial detailed view of the arrangement of Fig. 10; and
Fig. 12 is a simplified partial cross-sectional side view of another embodiment of a bearing arrangement, the first bearing part and the second bearing part shown in a noncontacting state, for illustrative purposes.

### DETAILED DESCRIPTION OF THE EMBODIMENTS

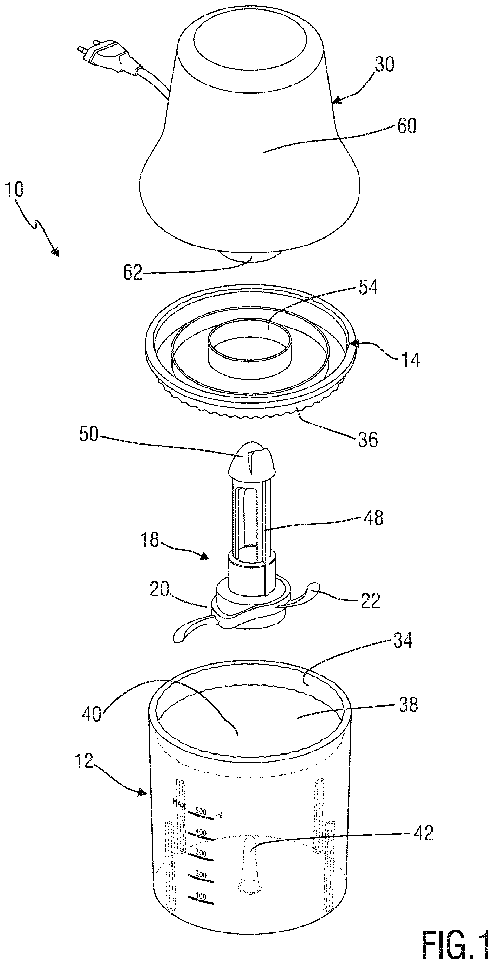

With reference to Fig. 1, Fig. 2 and Fig. 3, exemplary arrangements of food processing devices will be described and further detailed. The food processing devices are denoted by reference numeral 10, 110, and 210, respectively.

The food processing devices 10, 110, 210 may be also referred to as choppers, blenders or mixers. Generally, the food processing devices 10, 110, 210 are arranged to process, particularly to chop, grind or crush food substances, and to mix or blend different ingredients. Respective foodstuff products may be for instance vegetables, fruits, liquids, but also frozen foodstuff products, including ice and ice cubes.

The exemplarily shown food processing devices 10, 110, 210 of Fig. 1, 2 and 3 represent exemplary configurations of respective appliances.

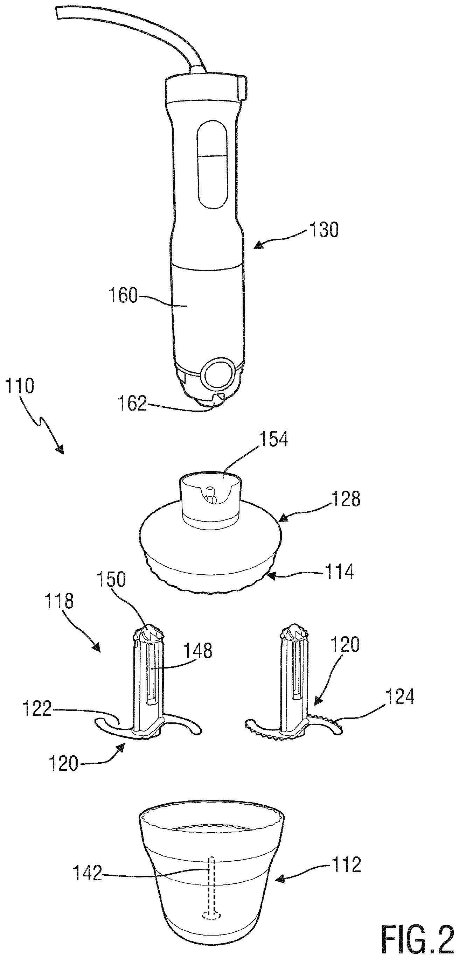

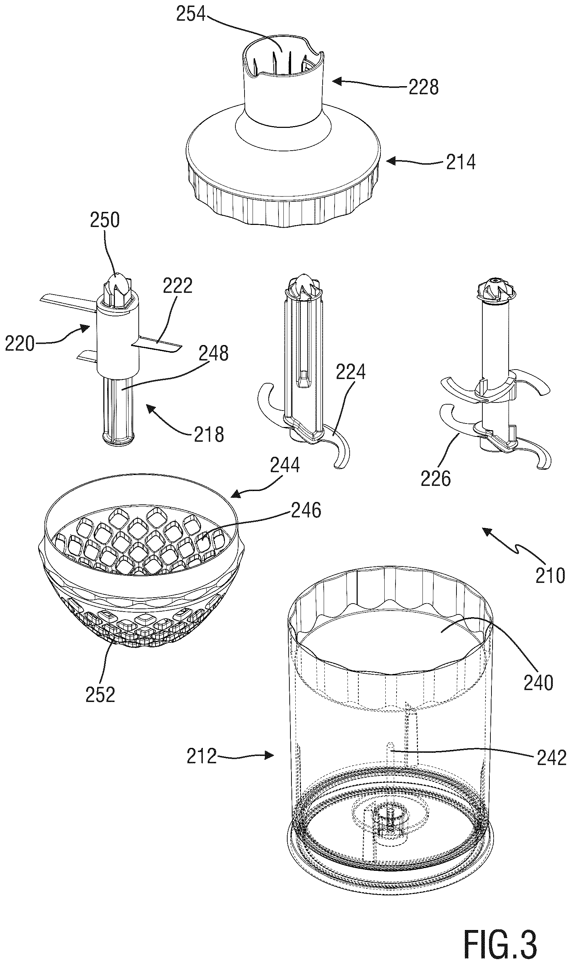

In Fig. 1, the food processing device 10 is arranged as an integrated device involving an integrated driving arrangement. The food processing device 110 of Fig. 2 is arranged to be driven by a separate driving unit, for instance a driving unit of a hand blender. However, the food processing device 110 may take the form of a respective set including the driving unit. In the alternative arrangement of Fig. 3, also the food processing device 210 illustrated therein is arranged to be engaged and to be driven by a separate, portable drive unit, for instance the drive unit of a hand blender or a hand mixer. However, in the configuration actually shown in Fig. 3, no drive unit is present. Consequently, Fig. 3 illustrates a configuration, wherein a single drive unit is used to serve as a driving means for different purposes and appliances. Consequently, the food processing device 210 of Fig. 3 is, for instance, arranged as an accessory kit for a hand blender or mixer.

It should be noted that several aspects and embodiments as discussed herein may be implemented in any of the arrangements of Fig. 1, Fig. 2 and Fig. 3.

In Fig. 1, the food processing device 10 comprises a container 12, a cover 14 and a tool unit 18. The cover 14 is arranged to be attached to the container 12. The tool unit 18 comprises a processing tool 20 implementing at least one blade 22. The blade 22 may be also referred to as chopper or chopping knife.

Further, the food processing device 10 of Fig. 1 involves a driving unit 30 which is arranged to be attached to at least one of the container 12 and the cover 14. Further, the driving unit 30 is arranged to contact and engage the tool unit 18 to set the processing tool 20 into rotations.

Typically, a rotation speed of the tool unit 18 may be in the range of about 1,000 RPM (revolutions per minute) to about 5,000 RPM, particularly in the range of about 1,000 RPM to about 3,000 RPM. Needless to say, other configurations of the food processing devices 10, 110, 210 operable at higher or lower rotation speeds may be envisaged.

A first mounting profile 34 is provided at the container 12. A second, mating mounting profile 36 is provided at the cover 14. Consequently, the cover 14 may be attached to the container 12 in a defined fashion. The container 12 comprises a top opening 38 which is at least substantially closed when the cover 14 is mounted to the container 12. In this way, a compartment 40 within the container 12 is defined. In an operation mode, also the tool unit 18 is at least substantially arranged in the compartment 40.

Generally, the container 12 may be formed from a basically transparent material, for instance from at least partially transparent injection-moldable material. At the container 12, a bearing pin or centering pin 42 is provided. The bearing pin 42 may be arranged as an integrated component of the container 12. However, in alternative embodiments, the bearing pin 42 may be arranged as a separate component that is arranged to be attached to the container 12. Typically, the bearing pin 42 is fixedly attached to the container 12 which particularly involves arrangements wherein the bearing pin 42 is arranged in a non-rotatable fashion.

Via the bearing pin 42, the container 12 may be coupled with the tool unit 14. In other words, the tool unit 18 is received at the container 12, particularly at the bearing pin 42 thereof, in a rotatable fashion. Hence, the bearing pin 42 may form part of a bearing arrangement as will be further discussed hereinbelow.

The tool unit 18 further comprises a shaft 48 which may be also referred to as transmission shaft. At a bottom end of the tool unit 18, an engagement with the bearing pin 42 is present, at least in the mounted state of the tool unit 18. At a top end of the tool unit 18, an engagement profile 50 is provided which may be also referred to as entrainment profile. Via the engagement profile 50, a rotational movement may be transmitted to the shaft 48 and, consequently, to the processing tool 20. The shaft 48 basically extends in a longitudinal fashion. In the mounted state of the tool unit 18, the shaft 48 is arranged as a basically vertical or vertically extending shaft. The processing tool 20, particularly the at least one blade 22 thereof, extends from the shaft 48 in a radial or at least basically rotor-like fashion. Consequently, a central shaft 48 is provided. The at least one blade 22 is arranged as an outwardly extending blade.

At the cover 14, an aperture 54 is formed which may be also referred to as transmission hole. The aperture 54 defines a portion of the cover 14 through which the tool unit 18 may at least partially extend towards the top, or may be engaged from the top by the driving unit 30.

At the driving unit 30, a motor 60 is provided. Further, a coupling section 62 is formed at the driving unit 30. The coupling section 62 may for instance involve an output shaft of the motor 60. The coupling section 62 and the engagement profile 50 may engage one another so as to operate and drive the processing tool 20. Via the aperture 54, the coupling section 62 and the engagement profile 50 are coupled, when the food processing device 10 is in operation.

The food processing device illustrated in Fig. 2 represents an alternative arrangement. As with the embodiment of Fig. 1, a container 112 and a cover 114 is provided. The cover 114 is arranged to be mounted on the container 112. Further, a tool unit 118 comprising a processing tool 120 is provided. In Fig. 2, an exemplary set of two alternative processing tools 120 is shown. The tool units 120 comprise respectively configured blades 122, 124. The blade 122 is for instance arranged as a chopping blade. The blade 124 is for instance arranged as a crushing blade, particularly an ice crushing blade.

Further, a transmission arrangement 128 is provided which may be also referred to as transmission unit. In the embodiment of Fig. 2, the transmission arrangement 128 is coupled with the cover 114. Both the cover 114 and the transmission arrangement 128 form a combined component of the food processing device 110.

As already indicated above, a portable hand-guided driving unit 130 may be present, and may be arranged to be coupled with the transmission arrangement 128, and to directly or mediately engage the tool unit 118 so as to operate and drive the processing tool 120.

At the container 112, a bearing pin 142 is provided, wherein the tool unit 118 is arranged to engage the bearing pin 142 in the mounted state. The tool unit 118 comprises a shaft 148 and an engagement profile 150 at a top end thereof. The engagement profile 150 may be directly or mediately engaged by a coupling section 162 of the driving unit 130. For instance, the coupling section 162 may be formed by an output shaft of a motor 160 of the driving unit 130. At the transmission arrangement 128, an aperture 154 which may be also arranged as a recess or a receptacle may be provided. The driving unit 130, particularly the coupling section 162 may be at least partially inserted in the aperture 154 so as to form a transmission link with the tool unit 118.

The food processing device 110 of Fig. 3 represents yet another arrangement. Generally, the food processing device 110 may be powered by a driving unit 130 as already discussed with reference to Fig. 2.

As with the embodiments of Fig. 1 and Fig. 2, the food processing device 210 comprises a container 212, a cover or lid 214, and a tool unit 218 comprising a processing tool 220. In Fig. 3, a set of processing tools 220 is illustrated. The processing tools 220 comprise differently shaped blades 222, 224, 226. The blade 222 is for instance arranged as an onion cutter knife. The blade 224 is for instance arranged as a two-blade chopper knife. The blade 226 is for instance arranged as a four-blade chopper knife.

As with the embodiment of Fig. 2, a transmission arrangement 228 is provided which is coupled with or attached to the cover 214. At the transmission arrangement 228, an aperture or receiving recess 254 is provided in which the driving unit 130 (refer to Fig. 2) may be at least partially inserted so as to operate and drive the food processing device 210.

The transmission arrangements 128, 228 of Fig. 2 and Fig. 3 may be arranged as direct transmission units, i.e. the speed of rotation at the input side thereof corresponds to the speed of rotation at the output side thereof. However, in alternative embodiments, the transmission arrangements 128, 228 may involve at least one gear stage. Generally, transmission arrangements of that kind may be arranged as reduction gear arrangements and (step-up) transmission gear arrangements. In accordance with these embodiments, the speed of rotation at the input side is different from the speed of rotation at the output side. Consequently, an appropriate speed range may be provided at the level of the tool units 118, 218.

At the container 212, a bearing pin 242 is provided which may be engaged by the tool unit 218. Further, the container 212 defines a processing compartment 240.

As can be further seen in Fig. 3, a perforated screen or basket 244 including a number of perforations 246 is provided. The perforated screen 244 may be basically arranged between the container 212 and the cover 214, and may be positioned, in a mounted state, at least partially within the compartment 240 defined by the container 212. When the cover 214 is mounted at the container 212, and when the perforated screen 244 is arranged therebetween, the compartment 240 is divided into a bottom portion and a top portion.

The perforated screen 244 may be coupled with the blade 222. The blade 222 differs from the alternative blades 224, 226 shown in Fig. 3 in that respective cutting elements are arranged at a top portion thereof, particularly adjacent to the engagement profile 250. Consequently, when the perforated screen 244 and the blade 222 are mounted, the blade 222 is arranged between the perforated screen 244 and the cover 214. In other words, no blade or cutting edge is present at the bottom portion of the compartment 240 between the perforated screen 244 and a bottom end of the container 212. To this end, also the perforated screen 244 is provided with an aperture or a hole 252 in which the tool unit 218, particularly the shaft 248 thereof may be arranged.

As already indicated above, features and details of any of the food processing devices 10, 110, 210 exemplarily discussed hereinbefore may be transferred to any of the other embodiments without departing from the scope of the present disclosure.

In the embodiments illustrated in Figs. 1, 2 and 3, the respective containers (reference numerals 12, 112, 212) form a bottom part of the food processing devices 10, 110, 210. In other words, the driving units 30, 130 approach and engage the tool units 18, 118, 218 in a top-to-bottom fashion. In the mounted state, the driving units 30, 130 are arranged above the containers 12, 112, 212. The containers 12, 112, 212 may be for instance arranged at a table or worktop, and may form a base of the food processing devices 10, 110, 210.

In the following, exemplary embodiments and arrangements of bearing arrangements will be discussed and further detailed. The respective bearing arrangements may be present at the interface or contact portion between the containers 12, 112, 212 and the tool units 18, 118, 218 respectively mounted thereto in an operation state of the food processing devices 10, 110, 210.

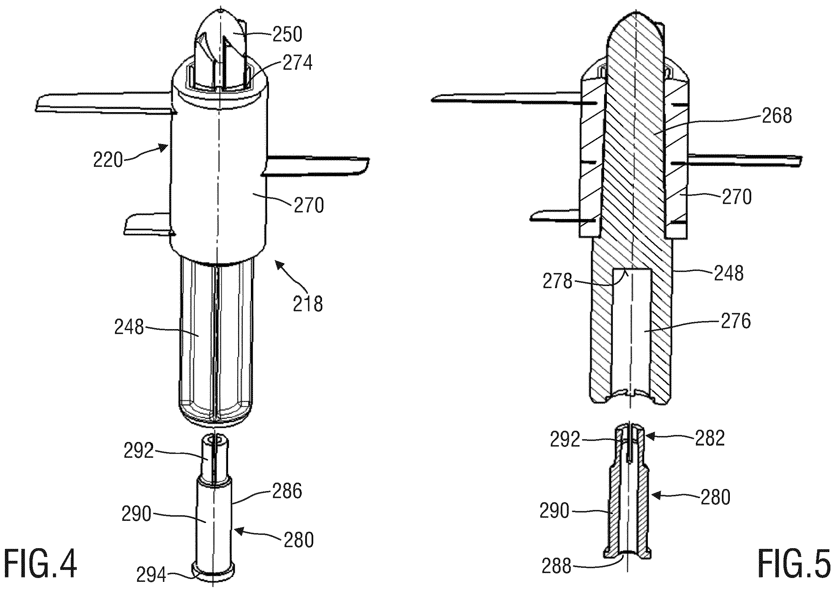

With reference to Fig. 4 and Fig. 5, an exemplary embodiment of a processing tool unit 218 will be described and further detailed. In Fig. 4 and Fig. 5, the tool unit 218 is illustrated in a partially exploded state, primarily for illustrative purposes. As already indicated hereinbefore, the tool unit 218 comprises a central shaft 218. At an end of the tool unit 218, particularly at an end of the shaft 248, an engagement profile 250 is formed. The end where the engagement profile 250 is formed may be referred to hereinafter as second or top end. Further, the tool unit 218 is arranged to receive a processing tool 220 including at least one respective processing blade 222. In the embodiment shown in Fig. 4 and Fig. 5, the shaft 248 comprises a bolt or stud 248 on which a sleeve 270 is arranged and fixed for rotation with the shaft 248. The sleeve 270 forms part of the processing tool 220. For instance, an engagement profile may be provided at both the stud 268 and the sleeve 270 defining an entrainment contour 274.

At a further end of the shaft 248 that is opposite to the end where the engagement profile 250 is provided, a recess 276 is formed. The end of the shaft 248 where the recess 276 is formed may be referred to as bottom end or first end. An inner end of the recess 276 may, at least in some embodiments, define an axial limit stop 278 for an axial bearing.

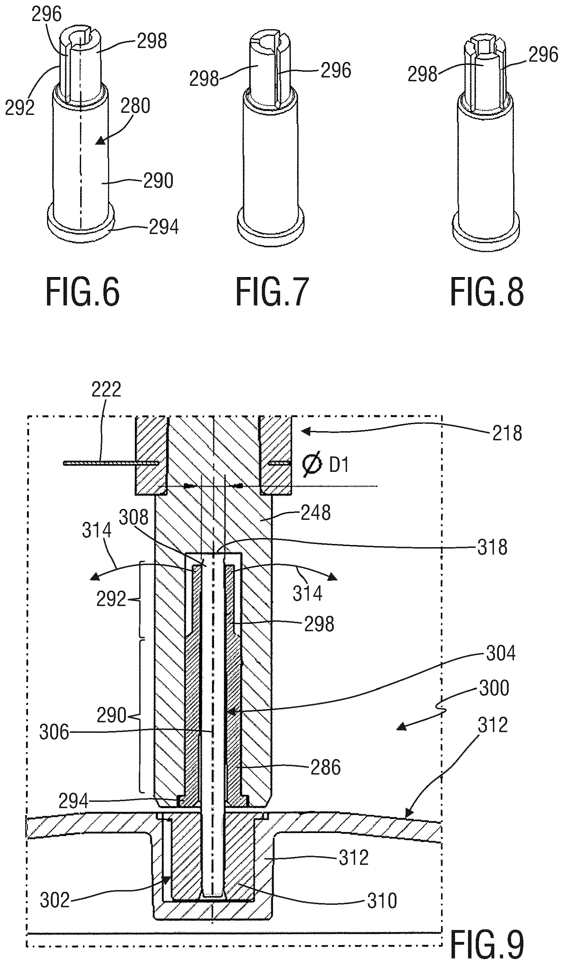

Generally, at least in some embodiments, the shaft 248 may be made from plastic material. In the recess 276, a second bearing part 280 may be arranged. The second bearing part 280 is arranged to cooperate with a first bearing part which will be described further below with reference to Fig. 9. The second bearing part 280 forms a part of a bearing arrangement between a container 212 (refer to Fig. 3) and the tool unit 218. The bearing arrangement will be explained hereinafter with reference to Fig. 9.

Again referring to Fig. 4 and Fig. 5, the second bearing part 280 may be arranged as a bearing seat 282. The bearing seat 282 may be formed from an appropriate metal-based or metal-containing material. However, also non-metal materials may be envisaged, for instance plastic material having sliding properties.

The second bearing part 280 may be inserted in the recess 276 and fixed therein for rotation with the shaft 248 and, consequently, with the tool unit 218. In alternative embodiments, the second bearing part 280 is arranged as an integrally formed portion of the tool unit 218, particularly of the shaft 248. This represents an alternative manufacturing approach and may reduce assembly efforts.

The second bearing part 280 comprises, or is embodied by, a sleeve 286 at one end thereof an insertion opening 288 is formed. The insertion opening 288 may be engaged by a corresponding pin of the first bearing part. Exemplary materials for the sleeve 286 that defines the second bearing part 280 may include plastics such as POM, PA, ABS, etc.

At a central portion of its longitudinal extension, the sleeve 286 comprises a tubular section 290. At an end thereof that is opposite to the insertion opening 288, the sleeve 286 comprises a slotted contact portion 292. Further, adjacent to the insertion opening 288, a collar 294 is provided which defines a relative axial position of the sleeve 286 with respect to the shaft 248 in the mounted state. The sleeve 286 providing the bearing seat 282 may be inserted in and particularly pressed into the recess 276 at the shaft 248.

With particular reference to Fig. 6, Fig. 7 and Fig. 8, exemplary embodiments of the second bearing part 280 will be described and further detailed. The arrangements of Fig. 6, Fig. 7 and Fig. 8 are basically formed in accordance with the second bearing part 280 shown in Figs. 4 and 5. At the slotted contact portion 292, different configurations are provided. In Fig. 6, the slotted contact portion 292 comprises two slots 296 arranged in a fashion opposite to one another and two corresponding tabs 298 which may be also referred to as contact tabs or deflectable tabs. The slots 296 basically extend in an axial fashion. The slots 296 define an interruption of a basically circular wall. The tabs 298 define the remaining portion of the circumferential wall between the slots 296.

In the embodiment of Fig. 7, three slots 296 and three corresponding tabs 298 are provided. The slots 296 are arranged at an angular offset of about 120° (degrees). In Fig. 8, four slots 296 and four corresponding tabs 298 are provided. The slots 296 are provided at an offset angle of about 90°.

Fig. 9 shows an enlarged view of a bearing arrangement 300 between a container 212 and a tool unit 218 of a food processing device 210, refer for instance to Fig. 3. The bearing arrangement 300 involves a second bearing part 280 as discussed hereinbefore with reference to Figs. 4 to 8. The second bearing part 280 is formed at the side of the tool unit 218. Further, the bearing arrangement 300 comprises a first bearing part 302 which is formed at the side of the container 212. Consequently, the first bearing part 302 is represented in Figs. 1, 2 and 3 by the bearing pins 42, 142 and 242.

The first bearing part 302 of Fig. 9 involves a bearing pin 304 which is arranged as a basically cylindrical bearing pin. Preferably, the bearing pin 304 is made from a metal material. However, at least in some embodiments, also a bearing pin 304 made from plastic material may be envisaged.

The first bearing part 302 and the second bearing part 280 define a longitudinal axis 306. In the embodiments as shown herein, the longitudinal axis 306 is arranged as a vertically extending axis.

At the bearing pin 304, a circumferential contact surface 308 is provided, particularly at a top end thereof facing the tool unit 218. The contact surface 308 is arranged to contact the second bearing part 280 in a sliding fashion, particularly when the tool unit 218 is rotated. In Fig. 9, a nominal diameter of the bearing pin 304, particularly of the contact surface 308 thereof is indicated by D₁. For instance, the nominal diameter may be at 4.0 mm (millimeters).

As can be further seen from Fig. 9, the bearing pin 304 is attached to a mounting socket 310 which is arranged in a receptacle 312. The receptacle 312 is formed as an integral portion of the container 212, particularly of a plastic bowl bottom portion thereof.

In the mounted or engaged state of the bearing arrangement 300, the bearing pin 304 is inserted in the sleeve 286 defining the second bearing part 280. As indicated by reference numeral 318 in Fig. 9, an axial end of the bearing pin 304 contacts the axial limit stop 278 of the recess 276. Consequently, a defined axial position of the tool unit 218 with respect to the container 212 is provided.

Further, the longitudinal extension of the tubular section 290 and the slotted contact portion 292 is indicated in Fig. 9 by braces. When the bearing pin 304 is received in the sleeve 286, a loose fit is provided between the tubular section 290 and the bearing pin 304. At the slotted contact portion 292, at least at a part thereof, an interference fit resulting in a deflection of the deflectable tabs 298 may be present, refer to arrows 314 in Fig. 9 indicating a radially outwardly oriented deflection of the tabs 298.

As a consequence, a defined pressing force or preloading is present between the first bearing part 302 and the second bearing part 280 which enables a stopping or safety brake feature.

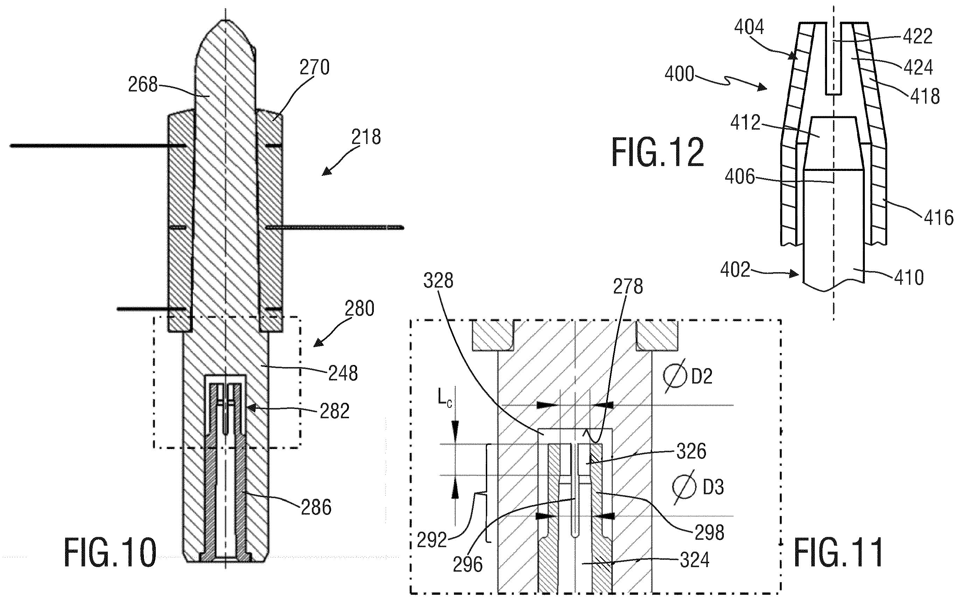

With reference to Fig. 10 and the corresponding detailed view of Fig. 11, an exemplary arrangement of the second bearing part 280 is further detailed. As discussed above, the second bearing part 280 defines a bearing seat 282 and is basically formed by a sleeve 286 which is inserted in a recess at the shaft 248 of the tool unit 218.

Exemplary dimensions of the second bearing part 280, particularly of the slotted contact portion 292 thereof are shown in Fig. 11. As already described above in connection with Fig. 9, the circumferential contact surface 308 of the bearing pin 304 of the first bearing part 302 may involve a nominal diameter D₁ of 4.0 mm.

At the slotted contact portion 292, particularly at the tabs 298 thereof, a contact surface 326 is formed which contacts the circumferential contact surface 308 of the bearing pin 304 in a mounted state. Further, a guide surface 324 is provided which is not necessarily in contact with the bearing pin 304. In other words, a nominal diameter D₂ of the contact surface 326 is at least slightly smaller than a nominal diameter D₃ of the guide surface 324. For instance, the diameter D₂ may be at 3.9 mm in a detached unbiased state. The diameter D₃ may be at about 4.2 mm so as to ensure that a loose fit with the bearing pin (D₁ of about 4.0 mm). Consequently, an interference fit between the outer diameter D₁ and the inner diameter D₂ at the contact portion is present. This results in an at least slight deflection of the tabs 298 which induces a defined pressing force or preloading.

In Fig. 11, an axial clearance between the sleeve 286 and the axial limit stop 278 is denoted by reference numeral 328. As with the embodiment of Figs. 9 to 11, the sleeve 286 does not provide for an axial bearing of the first bearing part 302. Rather, the axial bearing is provided by the axial limit stop 278 of the shaft 248.

The contact area between the bearing pin 304 and the sleeve 286 may involve an axial extension of 4.0 mm. In one embodiment, the nominal diameter D₂ of the contact surface 326 of the sleeve 286 may be at 3.9 + 0/-0.1 mm. In one embodiment, the nominal diameter D₁ of the bearing pin 304, particularly of the circumferential contact surface 308 thereof, may be at 4.0 +/-0.05 mm.

Two, three, four or more slots 296 and corresponding tabs 298 may be provided. The slots 296 may involve a longitudinal (axial) extension of about 12.0 mm and a width (circumferential extension) of about 1.0 mm. Hence, the longitudinal (axial) extension of the slots 296 may be larger than the longitudinal (axial) extension of the contact surface 326. A ratio between the longitudinal extension of the slots 296 and the contact surface 326 may be at about 3:1. Hence, the tabs 298 are considerably flexible.

With reference to Fig. 12, an alternative embodiment of a bearing arrangement 400 is described. In Fig. 12, a simplified partial cross-sectional view of the bearing arrangement 400 is shown. The bearing arrangement 400 comprises a first bearing part 402 arranged as a pin and a second bearing part 404 arranged as a sleeve. As with the embodiments discussed hereinbefore, the first bearing part 402 may be associated with a container of a food processing device. Similarly, the second bearing part 404 may be associated with a tool unit of the food processing device. However, also a converse assignment may be provided.

The first bearing part 402 and the second bearing part 404 define a common longitudinal axis 406. The first bearing part 402 and the second bearing part 404 may engage one another in a sliding fashion so as to enable a relative rotation therebetween.

The first bearing part 402 comprises a cylindrical shaft 410 and a tapered portion 412 which is exemplarily formed as an extension of the shaft 410. The second bearing part 404 comprises a tubular portion 416 and a tapered portion 418 which is arranged as an extension of the tubular portion 416. The tapered portion 418 is arranged as a slotted portion. Consequently, at least one slot 422 is provided defining at least one deflectable tab 424 at the tapered portion 418 of the second bearing part 404.

Thus, when the first bearing part 402 and the second bearing part 404 engage one another, the at least one tab 424 may be at least slightly deflected so as to generate a defined press force or preloading between the involved bearing components. Therefore, also the bearing arrangement 400 in accordance with Fig. 12 may enable a safety brake or sudden stop feature.

Further, the bearing arrangement 400 of Fig. 12 is not only arranged as a radial bearing part also as an axial bearing, due to the tapered (conical) shape of the contact portions 412, 418.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A safety bearing arrangement (300) for a food processing device (10, 110, 210) comprising a container (12, 112, 212) and a processing tool (20, 120, 220) arranged to be rotated with respect to the container (12, 112, 212) for processing food, the bearing arrangement (300) comprising a first bearing part (302), and a second bearing part (280), wherein one of the first bearing part (302) and the second bearing part (280) is associated with the container (12, 112, 212) and the other one is associated with a tool unit (18, 118, 228), **characterized in that** the first bearing part (302) and the second bearing part (280) are arranged to engage one another with an interference fit so that, when a driving torque is applied to the processing tool to rotate the first and second bearing parts with respect to one another, a friction torque is generated between said first and second bearing parts (302,280) to decelerate the processing tool (20, 120, 220) when no driving torque is applied to the processing tool (20, 120, 220).

2. The bearing arrangement (300) as claimed in claim 1, wherein the bearing arrangement (300) is operable in a first, operating state, when the processing tool (20, 120, 220) is powered by a drive unit (30, 130), and in a second, braking state, when the applied driving torque is below a friction torque that is present between the first bearing part (302) and the second bearing part (280).

3. The bearing arrangement (300) as claimed in claim 1 or 2, wherein the first bearing part (302) is a fixed bearing part and wherein the second bearing part (280) is a movable bearing part.

4. The bearing arrangement (300) as claimed in any of claims 1 to 3, wherein the first bearing part (302) is arranged at the container (12, 112, 212) and wherein the second bearing part (280) is arranged at the processing tool (20, 120, 220).

5. The bearing arrangement (300) as claimed in any of claims 1 to 4, wherein the first bearing part (302) is a bearing pin (304), wherein the second bearing part (280) is a recessed bearing seat (282), and wherein the bearing pin (304) is arranged to be inserted in the recessed bearing seat (282).

6. The bearing arrangement (300) as claimed in claim 1 to 5, wherein at least one of the first bearing part (302) and the second bearing part (280) comprises a deflectable contact portion (292), particularly a slotted contact portion, arranged to contact a mating contact portion (308) at the other one of the first bearing part (302) and the second bearing part (280) in a preloaded fashion.

7. The bearing arrangement (300) as claimed in claim 6, wherein a present preloading between the deflectable contact portion (292) and the mating contact portion is dependent on an axial relative position of the first bearing part (302) with respect to the second bearing part (280).

8. The bearing arrangement (300) as claimed in claim 6 or 7, wherein the deflectable contact portion (292) is formed at a bearing sleeve (286) comprising a slotted end portion including at least one basically axially extending slot (296).

9. The bearing arrangement (300) as claimed in any of claims 6 to 8, wherein a defined nominal interference fit is present between the first bearing part (302) and the second bearing part (280), and wherein, in an engaged state, the deflectable contact portion (292) is at least partially deflected, thereby limiting a press force.

10. A food processing device (10, 110, 210), comprising a container (12, 112, 212), a tool unit (18, 118, 228) arranged to receive a processing tool (20, 120, 220) that is drivable by a drive unit (30, 130), wherein the processing tool (20, 120, 220) is arranged to be rotated with respect to the container (12, 112, 212) for processing food, wherein the drive unit (30, 130) is arranged to be detachably coupled with the container (12, 112, 212), wherein the tool unit (18, 118, 228) is arranged to be interposed between the container (12, 112, 212) and the drive unit (30, 130), and wherein a bearing arrangement (300) as claimed in any of claims 1 to 10 is arranged between the container (12, 112, 212) and the processing tool (20, 120, 220) in such a way that the tool unit (18, 118, 228) is rotatably supported.

11. The device as claimed in claim 10, wherein, in a mounted state of the tool unit (18, 118, 228), a defined pressing force between the first bearing part (302) and the second bearing part (280) is present at the bearing arrangement (300), wherein the pressing force induces the braking frictional force.

12. The device as claimed in claim 10 or 11, wherein the container (12, 112, 212) is arranged as a bottom part comprising a top opening (38), wherein a basically vertically extending bearing pin (304) is arranged at the container (12, 112, 212), wherein the tool unit (18, 118, 228) comprises a first interface, particularly an engagement profile (50, 150, 250), arranged to be directly or mediately rotated by the driving unit (30, 130), and a second interface, particularly a bearing seat (282), arranged to engage the bearing pin (304).

13. The device as claimed in any of claims 10 to 12, further comprising a cover (14, 114, 214) arranged to cover a processing compartment (40) defined by the container (12, 112, 212), wherein the cover comprises a driving transfer passage through which a driving moment may be transferred into the processing compartment (40).

14. The device as claimed in claim 13, wherein the cover (14, 114, 214) is arranged to receive the driving unit (30, 130) or to be releasably coupled with the driving unit (30, 130), wherein the driving unit (30, 130) is arranged to rotate the processing tool (20, 120, 220) in a one-to-one translation fashion or at a defined translation ratio.

15. The device as claimed in claim 13 or 14, further comprising a perforated screen (244) arranged to be mounted at the container (12, 112, 212), the screen (244) being arranged to divide the compartment (40), wherein, in the mounted state, any blade (22, 122, 124, 222, 224, 226) of the processing tool (20, 120, 220) is arranged between the screen (244) and the cover (14, 114, 214), and wherein the screen (244) comprises a bearing opening (252) through which the processing tool (20, 120, 220) at least partially extends to form the bearing arrangement (300).

## Patentansprüche

1. Sicherheitslageranordnung (300) für eine Vorrichtung zur Lebensmittelverarbeitung (10, 110, 210), umfassend einen Behälter (12, 112, 212) und ein Verarbeitungswerkzeug (20, 120, 220), das angeordnet ist, um im Verhältnis zum Behälter (12, 112, 212) zum Verarbeiten von Lebensmitteln gedreht zu werden, wobei die Lageranordnung (300) einen ersten Lagerteil (302) und einen zweiten Lagerteil (280) umfasst, wobei einer vom ersten Lagerteil (302) und vom zweiten Lagerteil (280) dem Behälter (12, 112, 212) zugeordnet ist und der andere einer Werkzeugeinheit (18, 118, 228) zugeordnet ist, **dadurch gekennzeichnet, dass**
der erste Lagerteil (302) und der zweite Lagerteil (280) so angeordnet sind, dass sie mit einer Presspassung so ineinander eingreifen, dass, wenn ein Antriebsdrehmoment auf das Verarbeitungswerkzeug angewendet wird, um das erste und das zweite Lagerteil im Verhältnis zueinander zu drehen, ein Reibungsdrehmoment zwischen dem ersten und dem zweiten Lagerteil (302,280) erzeugt wird, um das Verarbeitungswerkzeug (20, 120, 220) zu verlangsamen, wenn kein Antriebsdrehmoment auf das Verarbeitungswerkzeug (20, 120, 220) angewendet wird.

2. Lageranordnung (300) nach Anspruch 1, wobei die Lageranordnung (300) betriebsfähig ist in einem ersten Betriebszustand, wenn das Verarbeitungswerkzeug (20, 120, 220) durch eine Antriebseinheit (30, 130) betrieben wird, und in einem zweiten bremsenden Zustand, wenn das angewendete Antriebsdrehmoment unter einem Reibungsdrehmoment liegt, das zwischen dem ersten Lagerteil (302) und dem zweiten Lagerteil (280) vorhanden ist.

3. Lageranordnung (300) nach Anspruch 1 oder 2, wobei der erste Lagerteil (302) ein fixer Lagerteil ist, und wobei der zweite Lagerteil (280) ein beweglicher Lagerteil ist.

4. Lageranordnung (300) nach einem der Ansprüche 1 bis 3, wobei der erste Lagerteil (302) am Behälter (12, 112, 212) angeordnet ist, und wobei der zweite Lagerteil (280) am Verarbeitungswerkzeug (20, 120, 220) angeordnet ist.

5. Lageranordnung (300) nach einem der Ansprüche 1 bis 4, wobei der erste Lagerteil (302) ein Lagerzapfen (304) ist, wobei der zweite Lagerteil (280) ein eingelassener Lagersitz (282) ist, und wobei der Lagerzapfen (304) angeordnet ist, um in den eingelassenen Lagersitz (282) eingeführt zu werden.

6. Lageranordnung (300) nach Anspruch 1 bis 5, wobei mindestens einer des ersten Lagerteils (302) und des zweiten Lagerteils (280) einen ablenkbaren Kontaktabschnitt (292) umfasst, konkret einen geschlitzten Kontaktabschnitt, der angeordnet ist, um mit einem ineinandergreifenden Kontaktabschnitt (308) am anderen des ersten Lagerteils (302) und des zweiten Lagerteils (280) auf vorgespannte Art und Weise in Kontakt zu gehen.

7. Lageranordnung (300) nach Anspruch 6, wobei eine vorhandene Vorspannung zwischen dem ablenkbaren Kontaktabschnitt (292) und dem ineinandergreifenden Kontaktabschnitt von einer axialen relativen Position des erstes Lagerteils (302) im Verhältnis zum zweiten Lagerteil (280) abhängig ist.

8. Lageranordnung (300) nach Anspruch 6 oder 7, wobei der ablenkbare Kontaktabschnitt (292) an einer Lagerbuchse (286) gebildet ist, die einen geschlitzten Endabschnitt umfasst, der mindestens einen sich im Wesentlichen axial erstreckenden Schlitz (296) enthält.

9. Lageranordnung (300) nach einem der Ansprüche 6 bis 8, wobei eine definierte nominale Presspassung zwischen dem ersten Lagerteil (302) und dem zweiten Lagerteil (280) vorhanden ist, und wobei, in einem eingerasteten Zustand, der ablenkbare Kontaktabschnitt (292) mindestens teilweise abgelenkt wird und dadurch eine Druckkraft einschränkt.

10. Vorrichtung zur Lebensmittelverarbeitung (10, 110, 210), umfassend einen Behälter (12, 112, 212), eine Werkzeugeinheit (18, 118, 228), die angeordnet ist, um ein Verarbeitungswerkzeug (20, 120, 220) aufzunehmen, das von einer Antriebseinheit (30, 130) angetrieben werden kann, wobei das Verarbeitungswerkzeug (20, 120, 220) angeordnet ist, um im Verhältnis zum Behälter (12, 112, 212) zum Verarbeiten von Lebensmitteln gedreht zu werden, wobei die Antriebseinheit (30, 130) angeordnet ist, um abnehmbar mit dem Behälter (12, 112, 212) gekoppelt zu sein, wobei die Werkzeugeinheit (18, 118, 228) angeordnet ist, um zwischen den Behälter (12, 112, 212) und die Antriebseinheit (30, 130) zwischengesetzt zu werden, und wobei eine Lageranordnung (300) nach einem der Ansprüche 1 bis 10 zwischen dem Behälter (12, 112, 212) und dem Verarbeitungswerkzeug (20, 120, 220) auf eine solche Art angeordnet ist, dass die Werkzeugeinheit (18, 118, 228) drehbar gestützt wird.

11. Vorrichtung nach Anspruch 10, wobei in einem eingebauten Zustand der Werkzeugeinheit (18, 118, 228) eine definierte drückende Kraft zwischen dem ersten Lagerteil (302) und dem zweiten Lagerteil (280) an der Lageranordnung (300) vorhanden ist, wobei die drückende Kraft die bremsende Reibungskraft verursacht.

12. Vorrichtung nach Anspruch 10 oder 11, wobei der Behälter (12, 112, 212) als ein untere Teil angeordnet ist, der eine obere Öffnung (38) umfasst, wobei ein sich im Wesentlichen vertikal erstreckender Lagerzapfen (304) am Behälter (12, 112, 212) angeordnet ist, wobei die Werkzeugeinheit (18, 118, 228) eine erste Grenzfläche umfasst, konkret ein Einrastprofil (50, 150, 250), die angeordnet ist, um direkt oder vermittelt von der antreibenden Einheit (30, 130) gedreht zu werden, und eine zweite Grenzfläche, konkret ein Lagersitz (282), die angeordnet ist, damit der Lagerzapfen (304) einrastet.

13. Vorrichtung nach einem der Ansprüche 10 bis 12, weiter umfassend eine Abdeckung (14, 114, 214), die angeordnet ist, um eine vom Behälter (12, 112, 212) definierte Kammer zum Verarbeiten (40) abzudecken, wobei die Abdeckung einen antreibenden Übertragungsdurchgang umfasst, durch den ein antreibendes Drehmoment an die Kammer zum Verarbeiten (40) übertragen werden kann.

14. Vorrichtung nach Anspruch 13, wobei die Abdeckung (14, 114, 214) angeordnet ist, um die antreibende Einheit (30, 130) aufzunehmen, oder um lösbar mit der antreibenden Einheit (30, 130) gekoppelt zu werden, wobei die antreibende Einheit (30, 130) angeordnet ist, um das Verarbeitungswerkzeug (20, 120, 220) in einer Art der Eins-zu-Eins-Übersetzung oder mit einem definierten Übersetzungsverhältnis zu drehen.

15. Vorrichtung nach Anspruch 13 oder 14, weiter umfassend eine perforierte Trennwand (244), die angeordnet ist, um am Behälter (12, 112, 212) eingebaut zu werden, wobei die Trennwand (244) angeordnet ist, um die Kammer (40) zu teilen, wobei, in einem eingebauten Zustand, jedes Blatt (22, 122, 124, 222, 224, 226) des Verarbeitungswerkzeugs (20, 120, 220) zwischen der Trennwand (244) und der Abdeckung (14, 114, 214) angeordnet ist, und wobei die Trennwand (244) eine Lageröffnung (252) umfasst, durch die sich das Verarbeitungswerkzeug (20, 120, 220) mindestens teilweise erstreckt, um die Lageranordnung (300) zu bilden.

## Revendications

1. Agencement de palier de sécurité (300) pour un dispositif de traitement de produits alimentaires (10, 110, 210) comprenant un récipient (12, 112, 212) et un outil de traitement (20, 120, 220) agencé pour être soumis à une rotation par rapport au récipient (12, 112, 212) pour traiter un produit alimentaire, l'agencement de palier (300) comprenant une première partie de palier (302) et une seconde partie de palier (280), dans lequel l'une de la première partie de palier (302) et de la seconde partie de palier (280) est associée au récipient (12, 112, 212) et l'autre est associée à une unité d'outillage (18, 118, 228), **caractérisé en ce que**
la première partie de palier (302) et la seconde partie de palier (280) sont agencées pour s'engager l'une l'autre avec un joint à ajustement serré de sorte que, lorsqu'un couple d'entraînement est appliqué à l'outil de traitement pour faire tourner la première et la seconde partie de palier l'une par rapport à l'autre, un couple de frottement soit généré entre lesdites première et seconde parties de palier (302, 280) afin de décélérer l'outil de traitement (20, 120, 220) lorsqu'aucun couple d'entraînement n'est appliqué à l'outil de traitement (20, 120, 220).

2. Agencement de palier (300) selon la revendication 1, dans lequel l'agencement de palier (300) peut fonctionner dans un premier état opératoire lorsque l'outil de traitement (20, 120, 220) est alimenté par une unité d'entraînement (30, 130) et dans un second état de freinage lorsque le couple d'entraînement appliqué se situe en dessous d'un couple de frottement qui est présent entre la première partie de palier (302) et la seconde partie de palier (280).

3. Agencement de palier (300) selon la revendication 1 ou 2, dans lequel la première partie de palier (302) est une partie de palier fixe et dans lequel la seconde partie de palier (280) est une partie de palier mobile.

4. Agencement de palier (300) selon l'une quelconque des revendications 1 à 3, dans lequel la première partie de palier (302) est agencée dans le récipient (12, 112, 212) et dans lequel la seconde partie de palier (280) est agencée dans l'outil de traitement (20, 120, 220).

5. Agencement de palier (300) selon l'une quelconque des revendications 1 à 4, dans lequel la première partie de palier (302) est une broche de palier (304), dans lequel la seconde partie de palier (280) est un siège de palier évidé (282) et dans lequel la broche de palier (304) est agencée pour être insérée dans le siège de palier évidé (282).

6. Agencement de palier (300) selon les revendications 1 à 5, dans lequel au moins l'une de la première partie de palier (302) et de la seconde partie de palier (280) comprend une partie de contact défléchissable (292), en particulier une partie de contact rainurée, agencée pour venir en contact avec une partie de contact connexe (308) à l'autre de la première partie de palier (302) et de la seconde partie de palier (280) de manière pré-sollicitée.

7. Agencement de palier (300) selon la revendication 6, dans lequel un pré-chargement présent entre la partie de contact défléchissable (292) et la partie de contact connexe dépend d'une position relative axiale de la première partie de palier (302) par rapport à la seconde partie de palier (280).

8. Agencement de palier (300) selon la revendication 6 ou 7, dans lequel la partie de contact défléchissable (292) est formée sur un manchon de palier (286) comprenant une partie d'extrémité rainurée comportant au moins une fente d'extension fondamentalement axiale (296).

9. Agencement de palier (300) selon l'une quelconque des revendications 6 à 8, dans lequel un joint à ajustement serré nominal défini est présent entre la première partie de palier (302) et la seconde partie de palier (280) et dans lequel, à l'état engagé, la partie de contact défléchissable (292) est au moins en partie défléchie, ce qui limite une force de compression.

10. Dispositif de traitement alimentaire (10, 110, 210) comprenant un récipient (12, 112, 212), une unité d'outillage (18, 118, 228) agencée pour recevoir un outil de traitement (20, 120, 220) qui peut être entraîné par l'unité d'entraînement (30, 130), dans lequel l'outil de traitement (20, 120, 220) est agencé pour tourner par rapport au récipient (12, 112, 212) pour le traitement de produits alimentaires, dans lequel l'unité d'entraînement (30, 130) est agencée pour être couplée de manière détachable avec le récipient (12, 112, 212), dans lequel l'unité d'outillage (18, 118, 228) est agencée pour être intercalée entre le récipient (12, 112, 212) et l'unité d'entraînement (30, 130) et dans lequel l'agencement de palier (300) selon l'une quelconque des revendications 1 à 10 est agencé entre le récipient (12, 112, 212) et l'outil de traitement (20, 120, 220) de manière que l'unité d'outillage (18, 118, 228) soit supportée à rotation.

11. Dispositif selon la revendication 10, dans lequel, à l'état monté de l'unité d'outillage (18, 118, 228), une force de compression définie entre la première partie de palier (302) et la seconde partie de palier (280) est présente dans l'agencement de palier (300), dans lequel la force de compression induit la force de frottement au freinage.

12. Dispositif selon la revendication 10 ou 11, dans lequel le récipient (12, 112, 212) est agencé en tant que partie inférieure comprenant une ouverture supérieure (38), dans lequel une broche de palier s'étendant fondamentalement verticalement (304) est agencée dans le récipient (12, 112, 212), dans lequel l'unité d'outillage (18, 118, 228) comprend une première interface, en particulier un profil d'engagement (50, 150, 250) agencé pour être soumis à une rotation directe ou par intermédiaire par l'unité d'entraînement (30, 130) et une seconde interface, en particulier un siège de palier (282) agencé pour s'engager sur la broche de palier (304).

13. Dispositif selon l'une quelconque des revendications 10 à 12, comprenant en outre une coiffe (14, 114, 214) agencée pour recouvrir un compartiment de traitement (40) défini par le récipient (12, 112, 212), dans lequel la coiffe comprend un passage de transfert d'entraînement via lequel un moment d'entraînement peut être transféré dans le compartiment de traitement (40).

14. Dispositif selon la revendication 13, dans lequel la coiffe (14, 114, 214) est agencée de manière à recevoir l'unité de traitement (30, 130) ou à être couplée de manière libérable avec l'unité de traitement (30, 130), dans lequel l'unité d'entraînement (30, 130) est agencée pour faire tourner l'outil de traitement (20, 120, 220) conformément en mode de translation un à un ou dans un rapport de translation défini.

15. Dispositif selon la revendication 13 ou 14, comprenant en outre un écran perforé (244) agencé pour être monté dans le récipient (12, 112, 212), l'écran (244) étant agencé pour diviser le compartiment (40), dans lequel, à l'état monté, n'importe quelle lame (22, 122, 124, 222, 224, 226) de l'outil de traitement (20, 120, 220) est agencée entre l'écran (244) et la coiffe (14, 114, 214) et dans lequel l'écran (244) comprend une ouverture de palier (252) à travers laquelle l'outil de traitement (20, 120, 220) s'étend au moins en partie pour former l'agencement de palier (300).
